(19) Europäisches Patentamt
European Patent Office
Office européen des brevets

(11) EP 4 488 327 A1

(12) EUROPEAN PATENT APPLICATION
published in accordance with Art. 153(4) EPC

(43) Date of publication:
08.01.2025 Bulletin 2025/02

(21) Application number: 23780153.5

(22) Date of filing: 24.03.2023

(51) International Patent Classification (IPC):
C08L 11/02 (2006.01) C08F 36/18 (2006.01)
C08F 236/18 (2006.01) C08K 3/22 (2006.01)

(52) Cooperative Patent Classification (CPC):
C08F 36/18; C08F 236/18; C08K 3/22; C08L 11/02

(86) International application number:
PCT/JP2023/011784

(87) International publication number:
WO 2023/190143 (05.10.2023 Gazette 2023/40)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 31.03.2022 JP 2022059373

(71) Applicant: Denka Company Limited
Tokyo 103-8338 (JP)

(72) Inventors:
- ITO, Misaki
Tokyo 103-8338 (JP)
- KUMAGAI, Yushi
Tokyo 103-8338 (JP)

(74) Representative: Gulde & Partner
Patent- und Rechtsanwaltskanzlei mbB
Berliner Freiheit 2
10785 Berlin (DE)

# (54) DIP-MOLDED ARTICLE, CHLOROPRENE-BASED POLYMER, AND METHOD FOR PRODUCING DIP-MOLDED ARTICLE

(57) The present invention aims to provide a dip-molded product which contains a chloroprene-based polymer, and has sufficient tensile strength at break, with excellent texture in the form of a dip-molded product (film) and excellent wearing comfort when made into gloves.

According to the present invention, provided is a dip-molded product containing a chloroprene-based polymer, having a storage modulus E' of 3.2 MPa or less and a loss modulus E" of 0.37 MPa or less in a frequency range of 10 Hz, obtained by tensile dynamic viscoelasticity measurement in accordance with a non-resonant forced vibration method, under conditions of a static tension of 5 gf, a temperature of 25°C, a strain of 0.75%, and an amplitude of 0.15 mm.

EP 4 488 327 A1

## Description

### Technical Field

This invention relates to a dip-molded product of chloroprene-based polymer, and a method for producing a dip-molded product. More precisely, it relates to a dip-molded product obtained by using a chloroprene-based polymer latex composition containing chloroprene-based polymer.

### Background Art

Chloroprene-based polymers are known as materials for dip-molded products such as medical surgical gloves, medical examination gloves, industrial gloves, balloons, catheters, and rubber boots.

Various techniques have been proposed for chloroprene polymer latex and chloroprene polymer dip-molded products for dip-molded product applications related to improving the flexibility of chloroprene polymers. Regarding dip-molded product applications, Patent Literature 1 describes a polychloroprene latex with a pH of 7 to 14, which contains 100 parts by mass of modified polychloroprene obtained by copolymerizing chloroprene and methacrylic acid, 90 to 150 parts by mass of water, 1 to 5 parts by mass of emulsifier, 0.5 to 2.5 parts by mass of potassium ion. Regarding dip-molded product applications, Patent Literature 2 describes a mercaptan modified polychloroprene latex, for which chloroprene and 2,3-dichloro-1,3-butadiene are copolymerized, and in the 13C-solid NMR spectrum of polychloroprene, a peak area (A) at 126.2 to 127.6 ppm, a peak area (B) at 122.0 to 126.2 ppm, and a peak area (C) at 129.9 to 130.3 ppm are within the range shown by the following general formula (I). Regarding dip-molded product applications, Patent Literature 3 describes a chloroprene polymer latex that can achieve both excellent flexibility and mechanical properties in a vulcanized rubber produced by dip-molding by containing a high molecular weight substance and a low molecular weight substance. Patent Literature 4 describes chloroprene polymer latex that exhibits excellent flexibility and mechanical properties even under mild vulcanization conditions by copolymerizing chloroprene monomer and isoprene monomer, the raw material of isoprene rubber. Patent Literature 5 describes a dip-molded product of isoprene/chloroprene-based polymer latex that exhibits excellent flexibility even without a diphenylguanidine reagent, a vulcanization accelerator, by mixing isoprene-based polymer latex and chloroprene-based polymer latex. Patent Literature 6 describes a dip-molded product of chloroprene-based polymer latex that exhibits excellent mechanical properties by mixing nitrile butadiene-based polymer (NBR) latex or isoprene-based polymer latex in a base of chloroprene-based polymer latex.

$$\frac{4.0}{100} \leqq \frac{A}{B-C} \leqq \frac{5.8}{100} \quad \cdots \text{(I)}$$

### Citation List

### Patent Literature

Patent Literature 1: JP-A-2014-114342
Patent Literature 2: WO2019/009038
Patent Literature 3: JP-A-2019-143002
Patent Literature 4: WO2021/132460
Patent Literature 5: JP-A-2017-508840
Patent Literature 6: JP-A-2020-189963

## Summary of Invention

### Technical Problem

Dip-molded products containing chloroprene-based polymer as dip-molded articles have been widely used in applications such as gloves, balloons, boots, and catheters. On the other hand, especially in application for medical rubber gloves, there is a trend to require excellent mechanical properties similar to those of dip-molded articles obtained from natural rubber or polyisoprene. Furthermore, it is desired to develop dip-molded articles containing chloroprene-based polymer with improved texture of the dip-molded product (dip-molded film) or wearing comfort (fit) when made into gloves.

Therefore, the present invention aims to provide a dip-molded product containing a chloroprene-based polymer having sufficient tensile strength at break, while having excellent texture of the dip-molded product (film) and the wearing comfort when made into gloves.

## Solution to Problem

According to the present invention, provided is a dip-molded product containing a chloroprene-based polymer, wherein a storage modulus E' is 3.2 MPa or less and a loss modulus E" is 0.37 MPa or less in a frequency region of 10 Hz, obtained by tensile dynamic viscoelasticity measurement of the dip-molded product in accordance with a non-resonant forced vibration method, under conditions of a static tension of 5 gf, temperature of 25°C, a strain of 0.75% and an amplitude of 0.15 mm.
Various embodiments of the present invention are illustrated below. The embodiments shown below can be combined with each other.
Preferably, the chloroprene-based polymer contains a monomer unit derived from 2,3-dichloro-1,3 -butadinene.
Preferably, when the dip-molded product is dissolved in tetrahydrofuran and the soluble content is measured by gel permeation chromatography, at least a peak with an average molecular weight of 3,000 to 80,000 is detected.
Preferably, the dip-molded product contains at least a metal oxide.
Preferably, the dip-molded product is an industrial or a household glove, a medical glove, a balloon, a catheter, or a rubber boot.
According to another aspect of the present invention, provided is a chloroprene-based polymer, wherein a storage modulus E' is 3.2 MPa or less and a loss modulus E" is 0.37 MPa or less in a frequency region of 10 Hz obtained by tensile dynamic viscoelasticity measurement of the dip-molded product in accordance with a non-resonant forced vibration method, under conditions of a static tension of 5 gf, temperature of 25°C, a strain of 0.75% and an amplitude of 0.15 mm. The dip-molded product is obtained by forming a chloroprene-based polymer latex composition containing the chloroprene-based polymer into the dip-molded article by an immersion coagulation method, followed by a heat-drying treatment at 150°C for 60 minutes.
According to another aspect of the present invention, provided is a method for producing a dip-molded product containing a chloroprene-based polymer, comprising a molding step in which a chloroprene-based polymer latex composition containing the chloroprene-based polymer is formed into the dip-molded article using a calcium-based coagulant by an immersion coagulation method, and a drying step in which the obtained dip-molded article is subjected to a heat-drying treatment to obtain the dip-molded product.
In the present invention, "JIS" means Japanese Industrial Standards.

Effects of Invention

According to the present invention, provided is a dip-molded product containing a chloroprene-based polymer, which has sufficient tensile strength at break, while having excellent texture of the dip-molded product (film) and the wearing comfort when made into gloves.

## Description of Embodiments

Hereinafter, embodiments for carrying out the present invention will be described in detail. Note that the present invention is not limited to the embodiments described below.

1. Chloroprene-based Polymer

First, a chloroprene-based polymer of one embodiment of the present invention will be described.
The chloroprene-based polymer described in this embodiment is a polymer containing a monomer unit derived from 2-chloro-1,3-butadiene (hereinafter also referred to as chloroprene). In addition, the chloroprene-based polymer of one embodiment of the present invention can also be a copolymer of chloroprene and other monomers copolymerizable with chloroprene. Examples of other monomers include 1-chloro-1,3-butadiene, 2,3-dichloro-1,3-butadiene, isoprene, styrene, methacrylic acid, acrylonitrile, sulfur, and the like. As other monomers, two or more types of these may be used in combination. The chloroprene-based polymer of one embodiment of the present invention preferably contains a monomer unit derived from 2,3-dichloro-1,3-butadiene. The chloroprene-based polymer of one embodiment of the present invention may not contain sulfur, and the chloroprene-based polymer of one embodiment of the present invention may not have an -S-S-structure caused by sulfur in the main chain.
The chloroprene-based polymer according to one embodiment of the present invention may be obtained by mixing two or more different chloroprene-based polymers. The chloroprene-based polymer preferably contains at least

one selected from the group consisting of a homopolymer of chloroprene (2-chloro-1,3-butadiene), a copolymer of chloroprene and 1-chloro-1,3-butadiene, a copolymer of chloroprene and 2,3-dichloro-1,3-butadiene, and a copolymer of chloroprene, 1-chloro-1,3-butadiene and 2,3-dichloro-1,3-butadiene, and more preferably contains at least one of a homopolymer of chloroprene and a copolymer of chloroprene and 2,3-dichloro-1,3-butadiene.

The chloroprene-based polymer according to one embodiment of the present invention can contain 50 to 100% by mass, preferably 70 to 100% by mass of monomer unit derived from chloroprene, when the chloroprene-based polymer contained in the chloroprene-based polymer latex composition is 100% by mass. The content of monomer unit derived from chloroprene is, for example, 50, 55, 60, 65, 70, 75, 80, 85, 90, 91, 92, 93, 94, 95, 96, 97, 98, 99, or 100% by mass, and may be in the range between the two values exemplified herein.

The chloroprene-based polymer according to one embodiment of the present invention can contain 0 to 30% by mass of monomer unit derived from 2,3-dichloro-1,3-butadiene, when the chloroprene-based polymer contained in the chloroprene-based polymer latex composition is 100% by mass. The content of monomer unit derived from 2,3-dichloro-1,3-butadiene is, for example, 0, 1, 2, 3, 4, 5, 6, 7, 8, 9, 10, 11, 12, 13, 14, 15, 16, 17, 18, 19, 20, 21, 22,23, 24, 25, 26, 27, 28, 29, or 30% by mass, and may be in the range between the two values exemplified herein.

The chloroprene-based polymer according to one embodiment of the present invention may also contain a monomer unit derived from chloroprene and a monomer unit derived from 2,3-dichloro-1,3-butadiene. In this case, the chloroprene-based polymer preferably contains 0 to 30% by mass, more preferably 5 to 25% by mass of monomer unit derived from 2,3-dichloro-1,3-butadiene, when the total of monomer unit derived from chloroprene and monomer unit derived from 2,3-dichloro-1,3-butadiene contained in the chloroprene-based polymer is 100% by mass.

In addition, when the chloroprene-based polymer is a mixture of two or more different chloroprene-based polymers, the content of each monomer unit means the total of each monomer unit in all chloroprene-based polymers contained in the chloroprene-based polymer latex composition.

In the chloroprene-based polymer according to one embodiment of the present invention, the content of the sulfur-modified chloroprene-based polymer contained in the chloroprene-based polymer latex composition is preferably 20% by mass or less, when the chloroprene-based polymer contained in the chloroprene-based polymer latex composition is 100% by mass. The content of the sulfur-modified chloroprene-based polymer is, for example, 0, 1, 2, 3, 4, 5, 6, 7, 8, 9, 10, 11, 12, 13, 14, 15, 16, 17, 18, 19, or 20% by mass, and may be in the range between the two values exemplified herein. The chloroprene-based polymer according to one embodiment of the present invention may not contain a sulfur-modified chloroprene-based polymer.

The chloroprene-based polymer of an embodiment of the present invention preferably has a peak with a weight average molecular weight of 3,000 to 80,000, in the molecular weight distribution obtained by gel permeation chromatography measurement of the sol content soluble in tetrahydrofuran in the chloroprene-based polymer. Peak positions for peaks detected in the range of 3,000 to 80,000 weight average molecular weight are, for example, 3,000, 4,000, 5,000, 6,000, 7,000, 8,000, 9,000, 10,000, 11,000, 12,000, 13,000, 14,000, 15,000, 16,000, 17,000, 18,000, 19,000, 20,000, 21,000, 22,000, 23,000, 24,000, 25,000, 26,000, 27,000, 28,000, 29,000, 30,000, 35,000, 40,000, 50,000, 60,000, 70,000, or 80,000, and may be in the range between the two values exemplified herein.

The chloroprene-based polymer of an embodiment of the present invention can be a mixture of two or more different chloroprene-based polymers, and preferably contains a chloroprene-based polymer with a weight average molecular weight of 3,000 to 80,000.

The chloroprene-based polymer of an embodiment of the present invention may further contain a chloroprene-based polymer with a weight average molecular weight of 500,000 to 1,500,000. The peak positions of the peaks detected in the range of 500,000 to 1,500,000 of the weight average molecular weight are, for example, 500,000, 600,000, 700,000, 800,000, 900,000, 1,000,000, 1,200,000, 1,300,000, or 1,500,000 and may be in the range between the two values exemplified herein.

The molecular weight distribution of the sol content soluble in tetrahydrofuran in the chloroprene-based polymer can be obtained by measuring the weight average molecular weight using gel permeation chromatography (GPC). Measurement conditions for GPC can be as described in the Examples. The weight average molecular weight of the chloroprene-based polymer can be controlled by adjusting the type and amount of a chain transfer agent, polymerization temperature, polymerization time, and polymerization conversion rate, and the like in the polymerization of each chloroprene-based polymer. In addition, as described below, the storage modulus E', the loss modulus E" and the tensile strength at break can be adjusted by adjusting the weight average molecular weight of the chloroprene-based polymer and the blending ratio of the chloroprene-based polymer having different weight average molecular weights.

The chloroprene-based polymer of an embodiment of the present invention preferably has a peak with a weight average molecular weight of 3,000 to 80,000, and a peak with a weight average molecular weight of 500,000 to 1,500,000 in the molecular weight distribution obtained by gel permeation chromatography measurement of the sol content soluble in tetrahydrofuran in the chloroprene-based polymer. That is, the chloroprene-based polymer of an embodiment of the present invention preferably contains a chloroprene-based polymer with a weight average molecular weight of 3,000 to 80,000 and a chloroprene-based polymer with a weight average molecular weight of 500,000 to 1,500,000.

The chloroprene-based polymer of an embodiment of the present invention preferably contains 5 to 40% by mass of a chloroprene-based polymer with a weight average molecular weight of 3,000 to 80,000, when the chloroprene-based polymer is 100% by mass. The chloroprene-based polymer of an embodiment of the present invention may contain, for example, 5, 10, 15, 20, 25, 30, 35, or 40% by mass of a chloroprene-based polymer with a weight average molecular weight of 5,000 to 50,000 when the chloroprene-based polymer is 100% by mass, and may be in the range between the two values exemplified herein.

The chloroprene-based polymer of an embodiment of the present invention preferably contains 60 to 95% by mass of a chloroprene-based polymer with a weight average molecular weight of 500,000 to 1,500,000, when the chloroprene-based polymer is 100% by mass. The chloroprene-based polymer of an embodiment of the present invention may contain, for example, 60, 65, 70, 75, 80, 85, 90, or 95% by mass of the chloroprene-based polymer with a weight average molecular weight of 500,000 to 1,500,000 when the chloroprene-based polymer is 100% by mass, and may be in the range between the two values exemplified herein.

By adjusting the content ratio of the chloroprene-based polymers with different weight average molecular weights to fall within the above numerical ranges, the storage modulus and the loss modulus can be adjusted more appropriately.

The chloroprene-based polymer of an embodiment of the present invention has a storage modulus E' of 3.2 MPa or less and a loss modulus E" of 0.37 MPa or less in a frequency range of 10 Hz of the dip-molded product containing the chloroprene-based polymer, as measured by a non-resonant forced vibration method under conditions of a static tension of 5 gf, a temperature of 25°C, a strain of 0.75%, and an amplitude of 0.15 mm.

Here, the dip-molded product is obtained by forming a chloroprene-based polymer latex composition containing the chloroprene-based polymer into a dip-molded article by an immersion coagulation method, followed by a heat-drying treatment at 150°C for 60 minutes. That is, the dip-molded product containing a chloroprene-based polymer can be obtained by dip-molding a chloroprene-based polymer latex composition containing the chloroprene-based polymer into a dip-molded article by an immersion coagulation method, followed by a heat-drying treatment at 150°C for 60 minutes. The dip-molded product can contain the chloroprene-based polymer as a base polymer, and when the dip-molded product is 100% by mass, it can contain 70% by mass or more of the chloroprene-based polymer, preferably 80% by mass or more, and more preferably 90% by mass or more. When the dip-molded product is 100% by mass, the content ratio of the chloroprene-based polymer in the dip-molded product is, for example, 70, 75, 80, 85, 90, 95, 96, 97, 98, 99, or 100% by mass, and may be in the range between the two values exemplified herein.

The storage modulus E' of the dip-molded product containing the chloroprene-based polymer is 3.2 MPa or less, and more preferably 3.0 or less. The storage modulus E' is, for example, 3.2, 3.1, 3.0, 2.9, 2.8, 2.7, 2.6, 2.5, 2.4, 2.3, 2.2, 2.1, 2.0, 1.9, 1.8, 1.7, 1.6, or 1.5 MPa, and may be in the range between the two values exemplified herein.

The loss modulus E" of the dip-molded product containing the chloroprene-based polymer is 0.37 MPa or less, and more preferably 0.35 or less. The loss modulus E" is, for example, 0.37, 0.35, 0.33, 0.32, 0.31, 0.30, 0.29, 0.28, 0.27, 0.26, 0.25, 0.24, 0.23, 0.22, 0.21, 0.20, 0.19, or 0.18 MPa, and may be in the range between the two values exemplified herein.

The storage modulus E' and the loss modulus E" of the dip-molded product containing the chloroprene-based polymer can be controlled by adjusting the type (weight average molecular weight, type and content ratio of monomer units, etc.), amount, and the like of the chloroprene-based polymer contained in the dip-molded product. The storage modulus E' and the loss modulus E" of the dip-molded product is as described below, and can be measured by the method described in the Examples and the like.

The chloroprene-based polymer of an embodiment of the present invention has a tensile strength at break measured in accordance with JIS K6251 for the dip-molded product containing the chloroprene-based polymer, for example 17, 18, 19, 20, 21, 22, 23, 24, 25, 26, 27, 28, 29, 30, 31, 32, 33, 34, 35, 36, 37, 38, 39, or 40 MPa, and may be in the range between the two values exemplified herein.

The tensile strength at break of the dip-molded product containing the chloroprene-based polymer can be controlled by adjusting the type (weight average molecular weight, type and content ratio of monomer units, etc.), amount, and the like of the chloroprene-based polymer contained in the dip-molded product. The method for measuring the tensile strength at break can be as described in the Examples.

## 2. Chloroprene-based Polymer Latex

The chloroprene-based polymer latex of an embodiment of the present invention contains the chloroprene-based polymer of the present invention. The dip-molded product of an embodiment of the present invention is also obtained using the chloroprene-based polymer latex composition containing the chloroprene-based polymer latex. The chloroprene-based polymer latex may be one in which a chloroprene-based polymer is dispersed in water, may be one in which at least one selected from the group consisting of a homopolymer of chloroprene, a copolymer of chloroprene and 1-chloro-1,3-butadiene, a copolymer of chloroprene and 2,3-dichloro-1,3-butadiene, and a copolymer of chloroprene, 1-chloro-1,3-butadiene, and 2,3-dichloro-1,3-butadiene is dispersed in water, and may be one in which a homopolymer of

chloroprene, or a copolymer of chloroprene and 2,3-dichloro-1,3-butadiene is dispersed in water.

3. Method for Producing Chloroprene-based Polymer Latex

Next, a method for producing the chloroprene-based polymer latex contained in the chloroprene-based polymer latex composition used to obtain the dip-molded product of the chloroprene-based polymer of the present invention will be described.

The method for producing the chloroprene-based polymer latex may include a polymerization step of polymerizing a monomer containing chloroprene to obtain a chloroprene-based polymer latex. In addition, the method for producing the chloroprene-based polymer latex may further include a mixing step of mixing two or more types of chloroprene-based polymer latex with different weight average molecular weights.

In the polymerization step, the monomer includes chloroprene, and can also include other monomers copolymerizable with chloroprene. Examples of other monomers copolymerizable with chloroprene include 1-chloro-1,3-butadiene, 2,3-dichloro-1,3-butadiene, isoprene, styrene, methacrylic acid, acrylonitrile, sulfur, and the like. The monomer may also include chloroprene and 2,3-dichloro-1,3-butadiene.

Preferably, the type and amount of each monomer is adjusted so that the content ratio of each monomer unit in the obtained chloroprene-based polymer is within the numerical range described above. As an example, the copolymerization amount of 2,3-dichloro-1,3-butadiene in the chloroprene-based polymer contained in the chloroprene-based polymer latex can also be in the range of 0 to 30% by mass with respect to total 100% by mass of the chloroprene monomer and 2,3-dichloro-1,3-butadiene contained in the chloroprene-based polymer. In this case, the amount of 2,3-dichloro-1,3-butadiene charged before the start of emulsion polymerization is preferably in the range of 0 to 30 parts by mass with respect to total 100 parts by mass of chloroprene monomer and 2,3-dichloro-1,3-butadiene monomer. From the viewpoint of polymerization control, the amount of 2,3-dichloro-1,3-butadiene charged is more preferably 5 to 25 parts by mass with respect to total 100 parts by mass of chloroprene monomer and 2,3-dichloro-1,3-butadiene monomer.

When producing a chloroprene-based polymer, raw monomers are polymerized by a polymerization method such as emulsion polymerization, solution polymerization, suspension polymerization, or bulk polymerization. Among these polymerization methods, emulsion polymerization is preferred because it has various advantages such as easy control, easy removal of polymer from the polymerization-completed solution and relatively high polymerization rate.

Emulsion polymerization is a type of radical polymerization, in which raw material monomers are introduced into a reaction vessel together with a chain transfer agent, water, an alkali (e.g., metal hydroxide such as potassium hydroxide, sodium hydroxide), an emulsifier (dispersant), a reducing agent (e.g., sodium bisulfite), a polymerization initiator, etc., and then polymerized.

As the type of chain transfer agent used during emulsion polymerization is not particularly limited, those commonly used in emulsion polymerization of chloroprene can be used. Examples thereof include long chain alkyl mercaptans such as n-dodecyl mercaptan and tert-dodecyl mercaptan, dialkyl xanthogen disulfides such as diisopropyl xanthogen disulfide and diethyl xanthogen disulfide, iodoform, etc. As the chain transfer agent, long chain alkyl mercaptans are preferred, and n-dodecyl mercaptan is more preferred.

By adjusting the type and amount of the chain transfer agent, the weight average molecular weight of the obtained chloroprene-based polymer latex can be adjusted.

As an example, in order to obtain a latex containing chloroprene-based polymer with a weight average molecular weight of 500,000 or more, that is, in order to obtain a chloroprene-based polymer latex for which a first peak exhibiting the weight average molecular weight of 500,000 or more is detected in the molecular weight distribution, the amount of the chain transfer agent charged before the start of emulsion polymerization is preferably 0.01 parts by mass or more, with respect to 100 parts by mass of monomers (for example, a total of 100 parts by mass of chloroprene and 2,3-dichloro-1,3-butadiene). From the viewpoint of obtaining a chloroprene-based polymer latex for which a peak exhibiting a weight average molecular weight of 500,000 or more is detected, the amount of chain transfer agent charged is more preferably 0.02 to 0.05 parts by mass, for example, 0.01, 0.02, 0.03, 0.04, 0.05, 0.06, 0.07, 0.08, or 0.09 parts by mass, less than 0.10 parts by mass, and may be in the range between the two values exemplified herein. When the amount of chain transfer agent, especially long chain alkyl mercaptans charged is 0.01 parts by mass or more, the storage stability of the latex is further improved, and when the charging amount is less than 0.10 parts by mass, especially less than 0.05 parts by mass, the amount of toluene insoluble content increases, and the obtained dip-molded product containing the chloroprene-based polymer latex has a higher breaking strength.

In addition, in order to obtain a latex containing the chloroprene-based polymer, that is, in order to obtain a chloroprene-based polymer latex for which a peak exhibiting a weight average molecular weight of 3,000 to 80,000 is detected in the molecular weight distribution, the amount of chain transfer agent charged before the start of emulsion polymerization is preferably 0.5 to 10.0 parts by mass, with respect to 100 parts by mass of monomers. In this case, the charging amount is, for example, 0.5, 1.0, 2.0, 3.0, 4.0, 5.0, 6.0, 7.0, 8.0, 9.0, or 10.0 parts by mass, and may be in the range between the two values exemplified herein.

Examples of the emulsifier include anionic emulsifiers and nonionic emulsifiers. Examples of anionic emulsifiers include fatty acid salts such as beef tallow fatty acid potassium salt, partially hydrogenated beef tallow fatty acid potassium salt, potassium oleate, and sodium oleate; resin acid salts such as potassium rosinate, sodium rosinate, hydrogenated potassium rosinate, and hydrogenated sodium rosinate; alkylbenzene sulfonates such as sodium dodecylbenzenesulfonate; and sodium salt of β-naphthalenesulfonic acid formalin condensate, and the like. Examples of nonionic emulsifiers include polyethylene glycol ester emulsifiers, polyvinyl alcohol, and the like. Among these, anionic emulsifiers are preferred, resinates are preferred, rosin acid and rosin acid salt as rosin acids are preferred, and at least one selected from the group consisting of potassium rosinate and sodium rosinate is more preferred. These emulsifiers can be used alone or in combination of two or more. The amount of emulsifier used is preferably 1.0 to 6.5 parts by mass with respect to 100 parts by mass of monomers.

In particular, the emulsifier used in emulsion polymerization preferably includes an anionic emulsifier, and more preferably resin acids, especially rosin acids. The use of rosin acids can prevent aggregation of rubber solids or pH fluctuations when blended with a base chloroprene-based polymer latex. Rosin acids include disproportionated rosin acids, conjugated resin acids, alkali metal salts of disproportionated rosin acids, alkali metal salts of conjugated resin acids, and the like.

In the producing method for the chloroprene-based polymer latex of an embodiment of the present invention, in addition to rosin acids, other commonly used emulsifiers and fatty acids can also be used. Other emulsifiers include, for example, preferably anionic emulsifiers, and in addition to the anionic emulsifiers described above, metal salts of aromatic sulfinic acid formalin condensates, sodium dodecylbenzenesulfonate, potassium dodecylbenzenesulfonate, sodium alkyldiphenyl ether sulfonate, potassium alkyldiphenyl ether sulfonate, sodium polyoxyethylene alkyl ether sulfonate, sodium polyoxypropylene alkyl ether sulfonate, potassium polyoxyethylene alkyl ether sulfonate, potassium polyoxypropylene alkyl ether sulfonate, and the like.

The content of anionic emulsifier other than rosin acid is preferably 0.2 to 1.0% by mass with respect to 100% by mass of the chloroprene-based polymer contained in the chloroprene-based polymer latex. Therefore, the amount of anionic emulsifier other than rosin acid charged before the start of emulsion polymerization is preferably within the range of 0.2 to 0.9 parts by mass, with respect to 100 parts by mass of monomers (for example, the total of chloroprene and 2,3-dichloro-1,3-butadiene).

The pH of the aqueous emulsion at the start of emulsion polymerization is preferably 10.5 to 13.5. Aqueous emulsion refers to a mixture solution of a chain transfer agent and monomers (chloroprene, 2,3-dichloro-1,3-butadiene, etc.) immediately before the start of emulsion polymerization, but it also includes cases where the composition changes by adding each component later or adding them in batches. When the pH of the aqueous emulsion at the start of emulsion polymerization is 10.5 or more, the polymerization reaction can be controlled more stably. When the pH is 13.5 or less, excessive increase in viscosity during polymerization is suppressed, and the polymerization reaction can be controlled more stably.

The polymerization temperature for emulsion polymerization is preferably within the range of 5 to 55°C. It is preferable that the temperature is 5°C or higher because the emulsion will not freeze, and if it is 55°C or lower, there will be no evaporation or boiling of the chloroprene monomer.

As the polymerization initiator, potassium persulfate, benzoyl peroxide, ammonium persulfate, hydrogen peroxide, etc. used in normal radical polymerization can be used.

The polymerization conversion rate is preferably in the range of 50 to 95%. The polymerization reaction is stopped by adding a polymerization terminator. When the polymerization conversion rate is 50% or more, the toluene-insoluble content tends to increase, and the strength of the obtained dip-molded coating tends to increase. It is also advantageous in terms of production costs. When the polymerization conversion rate is less than 95%, a decrease in polymerization reactivity due to a decrease in unreacted monomers can be avoided, and a decrease in productivity can also be avoided.

Examples of the polymerization terminator include diethylhydroxylamine, thiodiphenylamine, 4-tert-butylcatechol, 2,2'-methylenebis-4-methyl-6-tert-butylphenol, and the like. Unreacted monomers after emulsion polymerization can be removed by conventional methods such as vacuum distillation.

In addition, a freeze stabilizer, an emulsion stabilizer, a viscosity modifier, an antioxidant, a preservative or the like can be optionally added after polymerization to the chloroprene-based polymer latex obtained by the production method of an embodiment of the present invention, as long as the effect of the present invention is not impaired.

The method for producing the chloroprene-based polymer latex according to one embodiment of the present invention may further include a mixing step of mixing two or more types of chloroprene-based polymer latex with different weight average molecular weights after the polymerization step. In the mixing step, two or more types of chloroprene-based polymer latex can be mixed by a known method. In the mixing step, the chloroprene-based polymer latex may be obtained by, for example, stirring and mixing using a paddle blade at 30 to 300 rpm for 20 seconds to 3 minutes, and for example, at 100 rpm for 2 minutes.

4. Chloroprene-based Polymer Latex Composition

The chloroprene-based polymer latex composition of an embodiment of the present invention contains the chloroprene-based polymer latex containing the chloroprene-based polymer of the present invention. The chloroprene-based polymer latex composition of an embodiment of the present invention may contain, in addition to the chloroprene-based polymer latex, a metal oxide, an antioxidant, and other agents as required. The types and amounts of the metal oxides, the antioxidants, and other required agents that may be contained in the chloroprene-based polymer latex composition are described below as components that the dip-molded product may contain.

5. Method for Producing Chloroprene-based Polymer Latex

The method for producing the chloroprene-based polymer latex may include a raw material mixing step in which raw materials including the chloroprene-based polymer latex, the metal oxide, the antioxidant, and other necessary agents are mixed.
In the mixing step, an aqueous dispersion solution containing the metal oxide, the antioxidant, and other necessary agents can be prepared in advance, and the chloroprene-based polymer latex and the aqueous dispersion solution can be mixed.
The mixing step can be performed with a known mixing device such as a ball mill.

6. Dip-molded Product (dip-molded coating/film)

The dip-molded product of an embodiment of the present invention is obtained using the above-mentioned chloroprene-based polymer latex composition. The dip-molded article of the embodiment can be made by dip-molding the aforementioned chloroprene-based polymer latex composition alone or after mixing it with other chloroprene-based polymer latex compositions. The dip-molded product of the present invention can be obtained by dip-molding a chloroprene-based polymer latex composition containing the chloroprene-based polymer latex containing the chloroprene-based polymer by an immersion coagulation method, and then subjecting the dip-molded article to a heat-drying treatment at 150°C for 60 minutes. The dip-molded product of the present invention has a low storage modulus value and a loss modulus value and excellent mechanical properties such as tensile strength at break. The dip-molded product can be suitably used as industrial/general household gloves, medical gloves, balloons, catheters, and boots.
The dip-molded product of the present invention may have components contained in the chloroprene-based polymer latex described above. The dip-molded product can contain chloroprene-based polymer as a base polymer. When the dip-molded product is 100% by mass, the chloroprene-based polymer can be contained 70% or more by mass, preferably 80% or more by mass, and more preferably 90% or more by mass. When the dip-molded product is 100% by mass, the content ratio of the chloroprene-based polymer in the dip-molded product can be, for example, 70, 75, 80, 85, 90, 95, 96, 97, 98, 99, or 100% by mass, and may be in the range between the two values exemplified herein.
The dip-molded product containing the chloroprene-based polymer of the present invention has an excellent texture with or without the addition of a vulcanizing agent and a vulcanization accelerator, and exhibits excellent wearing comfort when made into gloves. The chloroprene-based polymer latex composition of one embodiment of the present invention may not contain the vulcanizing agent or the vulcanization accelerator, and also may not contain sulfur or the vulcanization accelerator such as thiuram-based, dithiocarbamate-based, thiourea-based, guanidine-based, xanthogenate-based, and thiazole-based vulcanization accelerator. The following is a detailed description of the components that the dip-molded product of the present invention may contain.

6.1 Metal Oxide

The dip-molded product of the chloroprene-based polymer of the present invention can contain a metal oxide.
The metal oxide contained in the chloroprene-based polymer latex composition used to obtain the dip-molded product is not particularly limited, and examples thereof include zinc oxide, lead oxide, trilead tetroxide, magnesium oxide, aluminum oxide, iron oxide, beryllium oxide, and titanium oxide. Preferably, the metal oxide includes zinc oxide. Zinc oxide is generally said to function as a scavenger for the dechlorination atoms of chloroprene-based polymers. In addition, these metal oxides may be used alone or in combination of two or more.
The amount of the metal oxide added is preferably 0.5 to 15.0 parts by mass, with respect to 100 parts by mass of solid content of the chloroprene-based polymer latex contained in the chloroprene-based polymer latex composition used to obtain the dip-molded product. When the amount of the metal oxide added is 0.5 parts by mass or more, the breaking strength is expected to improve due to the crosslinking effect between the polymers. When the amount of the metal oxide added is 15.0 parts by mass or less, a dip-molded product with excellent flexibility can be obtained. Further, from the viewpoint of physical property balance between flexibility and breaking strength of the obtained dip-molded product, the

amount of the metal oxide added is more preferably 0.5 to 5.0 parts by mass.

6.2 Antioxidant

The dip-molded product of the chloroprene-based polymer of the present invention can also contain an antioxidant.

The antioxidant is not particularly limited, and phenolic antioxidants, amine antioxidants, heatresistant oxidation (aging) antioxidants, ozone-resistant antioxidants, and the like can be used. When the obtained dip-molded product is used as a medical glove, a phenolic antioxidant can be used from the viewpoint of the color tone, texture, and hygiene of the dip-molded product. In particular, hindered phenol antioxidants have the above-mentioned effects. Examples of the hindered phenolic antioxidant include 2,2'-methylenebis(4-ethyl-6-t-butylphenol), 2,2'-methylenebis(4-methyl-6-t-butylphenol), 4,4'-butylidene(3-methyl-6-t-butylphenol), 4,4'-thiobis(3-methyl-6-t-butylphenol), butylated reaction product of p-cresol and dicyclopentadiene, 2,5'-di-t-butylhydroquinone, and 2,5'-di-t-amylhydroquinone. Among these, a butylated reaction product of p-cresol and dicyclopentadiene is preferred from the viewpoint of being generally dispersible in aqueous materials. Further, these compounds may be used alone or in combination of two or more.

The amount of the antioxidant added is preferably 0.5 to 10.0 parts by mass, with respect to 100 parts by mass of solid content of the chloroprene-based polymer latex contained in the chloroprene-based polymer latex composition used to obtain the dip-molded product. The amount of the antioxidant added is, for example, 1.0, 2.0, 3.0, 4.0, 5.0, 6.0, 7.0, 8.0, 9.0, or 10.0 parts by mass, and may be in the range between the two values exemplified herein. When the amount of the antioxidant added is 0.5 parts by mass or more, the effect of suppressing color tone change of the dip-molded product can be obtained. When the amount of the antioxidant added is 10.0 parts by mass or less, the stability of the chloroprene-based polymer latex composition is ensured. Further, from the viewpoint of physical property balance between flexibility and breaking strength of the obtained dip-molded product, the amount of the antioxidant added is more preferably 0.5 to 5.0 parts by mass.

6.3 Vulcanizing Agent and Vulcanization Accelerator

The dip-molded product of the chloroprene-based polymer of one embodiment of the present invention can also contain a vulcanizing agent and/or a vulcanization accelerator. In addition, the chloroprene-based polymer latex composition used to obtain the dip-molded product may not contain sulfur and the vulcanization accelerator such as thiuram-based, dithiocarbamate-based, thiourea-based, guanidine-based, xanthate-based, thiazole-based vulcanization accelerator. In other words, the chloroprene-based polymer latex composition includes those that contain a vulcanizing agent but do not contain a vulcanization accelerator, those that do not contain a vulcanizing agent but contain a vulcanization accelerator, those that contain a vulcanizing agent and a vulcanization accelerator, and those that do not contain a vulcanizing agent and a vulcanization accelerator. Whether or not to incorporate a vulcanizing agent and a vulcanization accelerator may be determined depending on the intended dip-molded product.

Examples of the vulcanizing agent include, but are not limited to, sulfur and the like. The amount of the vulcanizing agent added can be 0 to 10.0 parts by mass, with respect to 100 parts by mass of solid content of the chloroprene-based polymer latex contained in the chloroprene-based polymer latex composition. The amount of the vulcanizing agent added is, for example, 0, 1, 2, 3, 4, 5, 6, 7, 8, 9, or 10 parts by mass, and may be in the range between the two values exemplified herein.

A vulcanization accelerator is an agent that is added during the vulcanization of raw rubber for the purpose of interacting with the vulcanizing agent to increase the vulcanization rate, shorten the vulcanization time, lower the vulcanization temperature, reduce the amount of vulcanizing agent, and improve the physical properties of the vulcanized rubber, and usually refers to an agent that accelerates the sulfur vulcanization reaction.

Examples of the vulcanization accelerator commonly used for vulcanization of the chloroprene-based polymer latex include, but are not limited to, thiuram-based, dithiocarbamate-based, thiourea-based, guanidine-based, xanthate-based, thiazole-based vulcanization accelerators, and the like. These may be used alone or in combination of two or more as required.

Examples of the thiuram-based vulcanization accelerator include tetramethylthiuram disulfide, tetraethylthiuram disulfide, tetrabutylthiuram disulfide, tetrakis(2-ethylhexyl) thiuram disulfide, tetramethylthiuram monosulfide, dipentamethylenethiuram tetrasulfide, and the like.

Examples of the dithiocarbamate-based vulcanization accelerator include sodium dibutyldithiocarbamate, zinc dimethyldithiocarbamate, zinc diethyldithiocarbamate, zinc N-ethyl-N-phenyldithiocarbamate, zinc N-pentamethylenedithiocarbamate, copper dimethyldithiocarbamate, ferric dimethyldithiocarbamate, tellurium diethyldithiocarbamate, and the like, and zinc dibutyldithiocarbamate is particularly preferably used.

Examples of the thiourea-based vulcanization accelerator include ethylenethiourea, N,N'-diethylthiourea, trimethylthiourea, N,N'-diphenylthiourea, and the like.

Examples of the guanidine-based vulcanization accelerator include 1,3-diphenylguanidine, 1,3-di-o-tolylguanidine, 1-o-tolylbiguanide, di-o-tolylguanidine salt of dicatechol borate, and the like.

Examples of the xanthate-based vulcanization accelerator include zinc butylxanthate, zinc isopropylxanthate, and the like.

Examples of the thiazole-based vulcanization accelerator include 2-mercaptobenzothiazole, di-2-benzothiazolyl disulfide, 2-mercaptobenzothiazole zinc salt, cyclohexylamine salt of 2-mercaptobenzothiazole, 2-(4'-morpholinodithio) benzothiazole, and the like.

The amount of the vulcanization accelerator added can be 0 to 5.0 parts by mass, with respect to 100 parts by mass of solid content of the chloroprene-based polymer latex contained in the chloroprene-based polymer latex composition. The amount of the vulcanization accelerator added is, for example, 0, 0.5, 1.0, 1.5, 2.0, 2.5, 3.0, 3.5, 4.0, 4.5, or 5.0, and may be in the range between the two values exemplified herein.

6.4 Other Agents (Heteroaromatic ring-based compound)

The dip-molded product of the chloroprene-based polymer of the present invention may contain a heteroaromatic ring-based compound in the chloroprene-based polymer.

The heteroaromatic ring-based compound contained in the chloroprene-based polymer latex composition used to obtain the dip-molded product can be represented by the chemical formula (1), and has a benzimidazole structure. Note that the compound having this structure is sometimes employed mainly as a secondary anti-aging agent in the formulation of rubber composition.

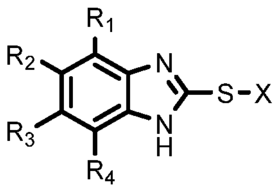

(1)

In chemical formula (1), X of the mercapto group represents a hydrogen atom or a metal atom. It is also possible for X to be a hydrogen atom and have a thiol group. In addition, X can also be a metal atom, and examples of the metal atom include zinc, sodium, copper, nickel, and tellurium, and among these, zinc is preferred.
In chemical formula (1), $R_1$ to $R_4$ each represents a hydrogen atom, an alkyl group which may have a substituent, an ether group which may have a substituent, a nitro group, an amino group, or a carboxyl group. $R_1$ to $R_4$ each may be the same or different. Further, the heteroaromatic ring-based compound may be used alone or in combination of two or more.

Examples of the heteroaromatic ring-based compound include 2-mercaptobenzimidazole, 5-methyl-2-mercaptobenzimidazole, 4-methyl-2-mercaptobenzimidazole, 5-methoxy-2-mercaptobenzimidazole, 4-methoxy-2-mercaptobenzimidazole, 5-nitro-2-mercaptobenzimidazole, 5-amino-2-mercaptobenzimidazole, 5-carboxy-2-mercaptobenzimidazole, or a zinc salt of 2-mercaptobenzimidazole. Among these, 2-mercaptobenzimidazole, 5-methyl-2-mercaptobenzimidazole, 4-methyl-2-mercaptobenzimidazole, 5-methoxy-2-mercaptobenzimidazole, 4-methoxy-2-mercaptobenzimidazole, zinc salt of 2-mercaptobenzimidazole are preferred.

The amount of the heteroaromatic ring-based compound added is preferably 0.2 to 10.0 parts by mass, with respect to 100 parts by mass of solid content of the chloroprene-based polymer latex contained in the chloroprene-based polymer latex composition. The amount of the heteroaromatic ring-based compound added is, for example, 0.2, 0.3, 0.4, 0.5, 1.0, 2.0, 3.0, 4.0, 5.0, 6.0, 7.0, 8.0, 9.0, or 10.0 parts by mass, and may be in the range between the two values exemplified herein. When the amount added is 0.2 parts by mass or more, the dip-molded product obtained using the present composition exhibits extremely high breaking strength. When the amount added is 10.0 parts by mass or less, the stability of the chloroprene-based polymer latex composition is ensured. In addition, from the viewpoint of physical property balance between flexibility and breaking strength of the obtained dip-molded product, the amount added is more preferably 0.3 to 5.0 parts by mass.

6.5 Characteristics of Dip-molded Product

The dip-molded product of an embodiment of the present invention has a storage modulus E' of 3.2 MPa or less, more preferably 3.0 MPa or less, in a frequency range of 10 Hz, when the dip-molded product is tested as a rectangular test piece (width: 4.5 mm, length: 30 mm) and subjected to a tensile dynamic viscoelasticity measurement (chuck distance: 20 mm) according to a non-resonant forced vibration method at a static tension of 5 gf, a temperature of 25°C, and a strain of 0.75% (amplitude: 0.15 mm). The storage modulus is, for example, 3.2, 3.1, 3.0, 2.9, 2.8, 2.7, 2.6, 2.5, 2.4, 2.3, 2.2, 2.1, 2.0, 1.9, 1.8, 1.7, 1.6, or 1.5 MPa, and may be in the range between the two values exemplified herein.

The dip-molded product of the present invention has a loss modulus E" of 0.37 MPa or less, more preferably 0.35 MPa or less, in a frequency range of 10 Hz, when the dip-molded product is tested as a rectangular test piece (width: 4.5 mm, length: 30 mm) and subjected to a tensile dynamic viscoelasticity measurement (chuck distance: 20 mm) according to a non-resonant forced vibration method at a static tension of 5 gf, a temperature of 25°C, and a strain of 0.75% (amplitude: 0.15 mm). The loss modulus E" is, for example, 0.37, 0.35, 0.33, 0.32, 0.31, 0.30, 0.29, 0.28, 0.27, 0.26, 0.25, 0.24, 0.23, 0.22, 0.21, 0.20, 0.19, or 0.18 MPa, and may be in the range between the two values exemplified herein.

Both the storage modulus E' and the loss modulus E" affect the texture and the wearing comfort of the dip-molded product in its main application as a glove, and by controlling the storage modulus E' to be not more than the above upper limit and the loss modulus E" to be not more than the above upper limit, the dip-molded product can be obtained with an excellent texture and wearing comfort when molded into gloves.

The breaking strength of the dip-molded product of the present invention, measured according to JIS K6251, is preferably 17 MPa or more. In particular, the ASTM standard "D3577" for surgical glove applications specifies a breaking strength of 17 MPa or more, and a breaking strength of 20 MPa would provide more sufficient mechanical properties. From the above, the dip-molded product of the chloroprene-based polymer of an embodiment of the present invention can have sufficient tensile strength at break while also having excellent texture of the dip-molded product (film) and wearing comfort when made into gloves.

The dip-molded product may contain a chloroprene-based polymer, and may further contain an antioxidant and a metal oxide. In addition, the above-mentioned dip-molded product may contain a vulcanizing agent, a vulcanization accelerator, and other reagents. The method for producing the dip-molded product, and the methods of measuring the storage modulus E', the loss modulus E", and the breaking strength can be as described in the Examples.

Furthermore, as mentioned above, the storage modulus E', the loss modulus E", and the breaking strength of the dip-molded product containing the chloroprene-based polymer latex composition can be controlled by adjusting the type and amount of the chloroprene-based polymer latex composition, the polymerization formulation and conditions of the chloroprene-based polymer latex used, and the heat-drying treatment conditions during the preparation of the dip-molded products, and thus controlling the weight average molecular weight and the degree of cross-linking.

6.6 Weight Average Molecular Weight of Dip-molded Product

The dip-molded product of an embodiment of the present invention may have a peak with a weight average molecular weight of 3,000 to 80,000 in the molecular weight distribution obtained by gel permeation chromatography measurement of the sol content soluble in tetrahydrofuran in the dip-molded product. The peak preferably has a weight average molecular weight of 5,000 to 50,000.

In the above molecular weight distribution, if the weight average molecular weight of the peak is equal to or higher than the lower limit described above, more excellent breaking strength can be obtained. The weight average molecular weight of the peak may be 10,000 or more, or 15,000 or more, from the viewpoint of easily obtaining the dip-molded article.

In the above molecular weight distribution, when the weight average molecular weight of the peak is equal to or less than the upper limit, more excellent flexibility can be obtained. The weight average molecular weight of the peak of the dip-molded product of the chloroprene-based polymer may be 80,000 or less, 70,000 or less, 50,000 or less, or 30,000 or less, from the viewpoint of easily obtaining even more excellent flexibility.

The weight average molecular weight of the peak is, for example, 3,000, 4,000, 5,000, 6,000, 7,000, 8,000, 9,000, 10,000, 11,000, 12,000, 13,000, 14,000, 15,000, 16,000, 17,000, 18,000, 19,000, 20,000, 21,000, 22,000, 23,000, 24,000, 25,000, 26,000, 27,000, 28,000, 29,000, 30,000, 35,000, 40,000, 50,000, 60,000, 70,000, or 80,000, and may be in the range between the two values exemplified herein.

The dip-molded product of the chloroprene-based polymer of an embodiment of the present invention preferably has the peak in the above-mentioned range in the above molecular weight distribution.

According to the dip-molded product of the chloroprene-based polymer of an embodiment of the present invention, by having the above molecular weight distribution, the values of the storage modulus E' and the loss modulus E" in dynamic viscoelasticity measurement become lower, and so the dip-molded product with excellent texture and wearing comfort feeling can be obtained.

The dip-molded product of an embodiment of the present invention may further have a peak with a weight average molecular weight of 500,000 to 1,500,000 in the molecular weight distribution obtained by gel permeation chromatography measurement of the sol content soluble in tetrahydrofuran in the dip-molded product. The peak position of the peak detected in the weight average molecular weight range of 500,000 to 1,500,000 is, for example, 500,000, 600,000, 700,000, 800,000, 900,000, 1,000,000, 1,200,000, 1,300,000, 1,400,000, or 1,500,000, and may be in the range between the two values exemplified herein.

The dip-molded product of an embodiment of the present invention preferably has a peak with a weight average molecular weight of 3,000 to 80,000 and a peak with a weight average molecular weight of 500,000 to 1,500,000 in the molecular weight distribution obtained by gel permeation chromatography measurement of the sol content soluble in

tetrahydrofuran in the dip-molded product.

The dip-molded product of an embodiment of the present invention preferably contains 5 to 40% by mass of the chloroprene-based polymer having a weight average molecular weight of 3,000 to 80,000, when the chloroprene-based polymer contained in the dip-molded product is 100% by mass. The dip-molded product of an embodiment of the present invention may contain, for example, 5, 10, 15, 20, 25, 30, 35, or 40% by mass of the chloroprene-based polymer having a weight average molecular weight of 5,000 to 50,000, when the chloroprene-based polymer is 100% by mass, and may be in the range between the two values exemplified herein.

The dip-molded product of an embodiment of the present invention preferably contains 60 to 95% by mass of the chloroprene-based polymer having a weight average molecular weight of 500,000 to 1,500,000, when the chloroprene-based polymer contained in the dip-molded product is 100% by mass. The dip-molded product of an embodiment of the present invention may contain, for example, 60, 65, 70, 75, 80, 85, 90, or 95% by mass of the chloroprene-based polymer having a weight average molecular weight of 500,000 to 1,500,000, when the chloroprene-based polymer is 100% by mass, and may be in the range between the two values exemplified herein.

The molecular weight distribution of the sol content soluble in tetrahydrofuran of the dip-molded product of the present invention can be obtained, for example, by cutting the dip-molded product to a specific size, immersing it in tetrahydrofuran at 25°C for 24 hours to make 0.1% tetrahydrofuran solution, and measuring the weight average molecular weight of the solution using gel permeation chromatography (GPC). The GPC measurement conditions can be as described in the Examples.

The molecular weight distribution of the sol content soluble in tetrahydrofuran in the chloroprene-based polymer latex contained in the chloroprene-based polymer latex composition can also be determined by using the chloroprene-based polymer latex or the chloroprene-based polymer latex composition as the analysis target, dissolving the chloroprene-based polymer latex or the chloroprene-based polymer latex composition in tetrahydrofuran, and performing the analysis in the same manner.

The chloroprene-based polymer latex composition used in the production of the dip-molded product may be obtained by mixing two or more types of chloroprene polymer latexes having different weight average molecular weights as described above. By using two or more chloroprene-based polymer latexes with different weight average molecular weights, the chloroprene-based polymer latex with the above-mentioned peak detected in the molecular weight distribution may be obtained. When two or more types of chloroprene polymer latexes are mixed, the weight average molecular weight of each chloroprene polymer latex can be controlled by adjusting the formulation such as the type and amount of the chain transfer agent, polymerization temperature, polymerization time, and polymerization conversion ratio and the like in the polymerization of each chloroprene-based polymer latex.

6.5 Shape of Dip-molded Product

The thickness (for example, minimum thickness) of the dip-molded product may be 0.01 to 0.50 mm. The thickness of the dip-molded product is, for example, 0.01, 0.05, 0.10, 0.20, 0.30, 0.40, or 0.50 mm, and may be in the range between the two values exemplified herein. The thickness of the dip-molded product can be adjusted by the time for which the mold is immersed in the polymer latex composition, the solid content concentration of the chloroprene-based polymer latex composition, and the like. If it is desired to reduce the thickness of the dip-molded product, the immersion time may be shortened or the solid content concentration of the chloroprene-based polymer latex composition may be reduced.

As described above, the dip-molded product of an embodiment of the present invention can have excellent texture and wearing comfort, and sufficient tensile strength at break regardless of the addition of vulcanizing agents, vulcanization accelerators, or cross-linking agents.

Conventional latex containing chloroprene rubber has been used as a raw material for rubber latex in dip-molded product coatings such as gloves, balloons, boots, and catheters and the like. On the other hand, especially in medical rubber glove applications, there is a tendency to demand high flexibility similar to dip-molded products obtained by using natural rubber or polyisoprene, and a dip-molded product of chloroprene-based polymer with improved texture (film) of the dip-molded product and wearing comfort (fit) when made into gloves is desired. The dip-molded product of the present invention has mechanical properties comparable to conventional dip-molded products containing chloroprene-based polymer, while having an excellent texture and wearing comfort when made into gloves.

The dip-molded product obtained from chloroprene-based polymer latex compositions may contain sulfur or vulcanization accelerators. However, even without sulfur and vulcanization accelerators, the above dip-molded product has mechanical properties comparable to or better than those of a vulcanized dip-molded product obtained from conventional chloroprene-based polymer latex. Therefore, the chloroprene-based polymer latex composition is suitably used as a raw material for the dip-molded product (dip-molded article) of the chloroprene-based polymer of this embodiment.

7. Method for Producing Dip-molded Product

The method for producing the dip-molded product containing the chloroprene-based polymer of the present invention may include the following steps:

A molding step in which the chloroprene-based polymer latex composition containing the chloroprene-based polymer described above is formed into the dip-molded article using a calcium-based coagulant by an immersion coagulation method, and
A drying step in which the obtained dip-molded article is subjected to a heat-drying treatment to obtain the dip-molded product.

The molding method for producing the dip-molded article according to an embodiment of the present invention is not particularly limited, and may be molded according to a conventional method. Examples of the molding method include an immersion coagulation method, a simple immersion method, a heat-sensitive immersion method, an electrodeposition method, etc. The immersion coagulation method can be used from the viewpoint of easy production and easily obtaining a dip-molded article with a constant thickness. Specifically, a mold die made of ceramics coated with a calcium-based coagulating liquid is immersed in the chloroprene-based polymer latex composition, and the chloroprene-based polymer latex composition is coagulated. Then, after water-soluble impurities are removed by leaching, it is dried, and further heated and vulcanized to form a dip-molded film (rubber coating), and then the dip-molded film is released from the mold. Thereby, a film-like dip-molded article can be obtained.

The method for producing the dip-molded product of an embodiment of the present invention may include a step of subjecting the obtained dip-molded article to a heat-drying treatment to vulcanize the unvulcanized dip-molded article. The heat drying temperature may be appropriately set according to the composition of the chloroprene-based polymer latex composition, and may be 100 to 220°C or 120 to 180°C. The heat drying temperature may be, for example, 100, 110, 120, 130, 140, 150, 160, 170, 180, 190, 200, 210, or 220°C, and may be in the range between the two values exemplified herein. The heat drying time may be appropriately set according to the composition of the chloroprene-based polymer latex composition, or the shape of the unvulcanized molded article, or the like, and may be 10 to 300 minutes. The heat drying time may be, for example, 10, 20, 30, 40, 50, 60, 70, 80, 90, 100, 110, 120, 130, 140, 150, 160, 170, 180, 190, 200, 210, 220, 230, 240, 250, 260, 270, 280, 290, or 300 minutes, and may be in the range between the two values exemplified herein. As an example, the dip-molded product of an embodiment of the present invention may be subjected to a heat drying treatment at 150°C for 60 minutes.

Examples

Hereinafter, the present invention will be explained in more detail based on Examples and Comparative Examples, but the present invention is not limited to these Examples. In the following examples related to the synthesis of chloroprene-based polymer latex, unless otherwise specified, "part by mass" is the amount relative to total 100 parts by mass of chloroprene monomer and 2,3-dichloro-1,3-butadiene monomer before the start of emulsion polymerization. In addition, "% by mass" is the amount relative to 100% by mass of the chloroprene-based polymer contained in the chloroprene-based polymer latex.

[Synthesis Example A1]

<Preparation of chloroprene-based polymer latex>

In a polymerization vessel with an internal volume of 40 liters, 91 parts by mass of chloroprene monomer, 9 parts by mass of 2,3-dichloro-1,3-butadiene monomer, 0.02 parts by mass of n-dodecylmercaptan, 76.5 parts by mass of pure water, 18 parts by mass of gum rosin-based disproportionated potassium rosinate (aqueous solution, 25% solids content) (product name "RONJIS K-25", manufactured by Arakawa Chemical Industry Co.), 0.80 parts by mass of potassium hydroxide, and 0.50 parts by mass of sodium salt of β-naphthalenesulfonic acid formalin condensate (product name "Demol N", manufactured by Kao Corporation) were added. The pH of the aqueous emulsion before the start of polymerization was 13.2. As a polymerization initiator, 0.1 parts by mass of potassium persulfate was added, and polymerization was carried out at a polymerization temperature of 15°C under a nitrogen flow. When the polymerization conversion rate reached 83%, 0.01 parts by mass of diethylhydroxylamine was added as a polymerization terminator to stop the polymerization, and a latex was obtained.

The latex was distilled under reduced pressure to remove unreacted monomers and some water to obtain a chloroprene-based polymer latex with a solid content of 60%.

[Synthesis Examples of A2 to A4]

Chloroprene-based polymer latex samples of Synthesis Examples A2 to A4 were prepared in the same manner as in Synthesis Example A1, except that the charging amounts of 2,3-dichlsoro-1,3-butadiene and n-dodecylmercaptan as a chain transfer agent, the polymerization temperature, and the polymerization conversion rate were changed as shown in Table 1 below.

[Synthesis Example B1]

<Preparation of chloroprene-based polymer latex>

In a polymerization vessel with an internal volume of 40 liters, 91 parts by mass of chloroprene monomer, 9 parts by mass of 2,3-dichloro-1,3-butadiene monomer, 3.0 parts by mass of n-dodecylmercaptan, 76.5 parts by mass of pure water, 18 parts by mass of gum rosin-based disproportionated potassium rosinate (aqueous solution) (product name "RONJIS K-25", manufactured by Arakawa Chemical Industry Co.), 0.80 parts by mass of potassium hydroxide, and 0.50 parts by mass of sodium salt of β-naphthalenesulfonic acid formalin condensate (product name "Demol N", manufactured by Kao Corporation) were added. The pH of the aqueous emulsion before the start of polymerization was 13.1. As a polymerization initiator, 0.1 parts by mass of potassium persulfate was added, and polymerization was carried out at a polymerization temperature of 30°C under a nitrogen flow. When the polymerization conversion rate reached 83%, 0.01 parts by mass of diethylhydroxylamine was added as a polymerization terminator to stop the polymerization, and a latex was obtained.

The latex was distilled under reduced pressure to remove unreacted monomers to obtain a chloroprene-based polymer latex with a solid content of 60%.

[Synthesis Examples B2 to B8]

Chloroprene-based polymer latex samples of Synthesis Examples B2 to B8 were prepared in the same manner as in Synthesis Example B1, except that the charging amounts of 2,3-dichlsoro-1,3-butadiene and n-dodecylmercaptan as a chain transfer agent, the polymerization temperature, and the polymerization conversion rate were changed as shown in Table 1 below.

The obtained chloroprene-based polymer latex containing the chloroprene-based polymer was subjected to the following analyses.

<Weight average molecular weight measurement of each chloroprene-based polymer latex>

The polymer precipitated with methanol from the obtained latex containing the chloroprene-based polymer was dissolved in tetrahydrofuran to make a 0.1% THF (tetrahydrofuran) solution, and the weight average molecular weight of the eluted portion (sol portion) was measured by gel permeation chromatography (GPC). The detected peak can be obtained as the weight average molecular weight in polystyrene equivalent, and was measured under the conditions described below.

<Weight average molecular weight measurement by gel permeation chromatography>

GPC measurements were performed under the following conditions. The weight average molecular weight was calculated based on polystyrene equivalent.

- Gel permeation chromatography (GPC) measuring device: gel permeation chromatograph (HLC-8320) manufactured by Tosoh Corporation
- Column: TSKgel ALPHA-M manufactured by Tosoh Corporation
- Eluent: tetrahydrofuran (manufactured by Kanto Chemical Co., Inc.)
- Eluent flow rate: 1.0ml/min
- Column temperature: 40°C
- Detection method: Differential refractive index (RI) meter
- Calibration curve: created using standard polystyrene

<Measurement of copolymerization amount of 2,3-dichloro-1,3-butadiene>

The obtained chloroprene-based polymer latex was freeze-dried to obtain a rubber sample of the chloroprene-based polymer, which was then cut into a test piece of 0.05 mg, and measured by pyrolysis gas chromatography to determine the area ratio of the peak derived from chloroprene with respect to the peak derived from 2,3-dichloro-1,3-butadiene. Using a calibration curve of the area ratio of the peak derived from chloroprene with respect to the peak derived from 2,3-dichloro-1,3-butadiene and the 2,3-dichloro-1,3-butadiene content, the content (mass%) of 2,3-dichloro-1,3-butadiene in the chloroprene-based polymer was determined.

<Measurement of pyrolysis gas chromatography>

The measurement conditions for the pyrolysis gas chromatography are as follows:

Instrument name: HP5890-II
Column: DB-5 0.25mmφ x 30m (film thickness 1.0μm)
Column temperature: 50°C (5min) → 10°C/min → 150°C → 25°C/min → 300°C
Injection port temperature: 250°C
Detector temperature: 280°C
Detector: FID

Table 1

| Table 1 | | | Synthesis Examples | | | | | | | | | | | |
|---|---|---|---|---|---|---|---|---|---|---|---|---|---|---|
| | | | A1 | A2 | A3 | A4 | B1 | B2 | B3 | B4 | B5 | B6 | B7 | B8 |
| Polymerization recipe | Chloroprene | parts by mass | 91 | 100 | 90 | 100 | 91 | 91 | 91 | 100 | 91 | 91 | 90 | 100 |
| | 2,3-dichloro-1,3-butadiene | parts by mass | 9 | 0 | 10 | 0 | 9 | 9 | 9 | 0 | 9 | 9 | 10 | 0 |
| | n-dodecylmercaptan | parts by mass | 0.02 | 0.02 | 0.07 | 0.05 | 300 | 200 | 8.00 | 2.80 | 13.00 | 0.80 | 0.31 | 0.25 |
| Polymerization conditions | Polymerization temperature | °C | 15 | 35 | 40 | 40 | 30 | 40 | 20 | 20 | 35 | 40 | 40 | 40 |
| | Polymerization rate | % | 83 | 90 | 90 | 90 | 83 | 88 | as | 85 | 78 | 90 | 90 | 90 |
| Chloroprene-based polymer | Weight average molecular weight | g/mol | 800,000 | 810,000 | ※ | ※ | 22,715 | 33,628 | 8,680 | 19,632 | 4,150 | 68,560 | 380,000 | 290,000 |
| | Copolymerization amount of 2,3-dichloro-1,3-butadiene | % by mass | 9.5 | - | 10.2 | - | 9.6 | 9.3 | 9.4 | - | 10.1 | 9.3 | 10.3 | - |

※ In the molecular weight distribution obtained by gel permeation chromatography, no peak was observed with a weight average molecular weight between 3,000 and 80,000.

[Example 1]

When the total of the chloroprene-based polymer latex of Synthesis Example A1 and the chloroprene-based polymer latex of Synthesis Example B1 was 100 parts by mass, 80 parts by mass of the sample of Synthesis Example A1 and 20 parts by mass of the sample of Synthesis Example B1 were mixed by stirring using a paddle blade at 100 rpm for 2 minutes, thereby obtaining the chloroprene-based polymer latex of Example 1.

<Weight average molecular weight measurement of the chloroprene-based polymer latex>

The polymer precipitated with methanol from the mixed chloroprene-based polymercontaining latex was dissolved in tetrahydrofuran to make a 0.1% THF (tetrahydrofuran) solution, and the tetrahydrofuran-soluble portion was measured by gel permeation chromatography (GPC). As a result, a peak with a weight average molecular weight (Mw) of 22,715 was confirmed. The GPC measurement conditions were the same as those for the weight average molecular weight measurement in each of the above synthesis examples.

<Copolymerization amount of 2,3-dichloro-1,3-butadiene contained in the chloroprene-based polymer latex>

The copolymerization amount of 2,3-dichloro-1,3-butadiene in the chloroprene-based polymer rubber obtained by freeze-drying the mixed chloroprene-based polymer latex was measured, and the result was 9.5% by mass. This analysis confirmed that the copolymerization amount of 2,3-dichloro-1,3-butadiene in the chloroprene-based polymer roughly correlates with the blended amount (charged amount) of 2,3-dichloro-1,3-butadiene. The conditions for this measurement were the same as those for the pyrolysis gas chromatography measurements in each of the synthesis examples above.

<Preparation of dip-molded article (dip-molded film sample)>

(Preparation of chloroprene-based polymer latex composition)

A chloroprene-based polymer latex composition was prepared by mixing 100 parts by mass of solids of the chloroprene-based polymer latex with an aqueous dispersion, and adding water to adjust the total solids concentration of the blend to 30% by mass. The aqueous dispersion was prepared by mixing 2 parts by mass of Type 2 zinc oxide, 2 parts by mass of a butylated reaction product of p-cresol and dicyclopentadiene (product name "Nocrac PBK", manufactured by Ouchi Shinko Chemical Industry Co., Ltd.), 2 parts by mass of zinc salt of dibutyldithiocarbamate (product name "Noccela BZ", manufactured by Ouchi Shinko Chemical Industry Co., Ltd.), 1 part by mass of sulfur, 0.1 part by mass of sodium salt of β-naphthalenesulfonic acid formalin condensate (product name "Demol N", manufactured by Kao Corporation) and 10.7 parts by mass of water at 20°C for 16 hours using a ceramic ball mill. The obtained chloroprene-based polymer latex composition contains, relative to 100 parts by mass of the solid content of the chloroprene-based polymer latex, 2 parts by mass of Type 2 zinc oxide, 2 parts by mass of a butylated reaction product of p-cresol and dicyclopentadiene (product name "Nocrac PBK", manufactured by Ouchi Shinko Chemical Industry Co., Ltd.), 2 parts by mass of dibutyldithiocarbamic acid (product name "Noccela BZ", manufactured by Ouchi Shinko Chemical Industry Co., Ltd.), 1 part by mass of sulfur, 0.1 part by mass of a sodium salt of β-naphthalenesulfonic acid formalin condensate (product name "Demol N", manufactured by Kao Corporation), and water.

(Preparation of dip-molded film of chloroprene-based polymer)

A ceramic surgical glove mold (manufactured by Shinko Co., Ltd.) with a palm circumference of 7.5 inches was immersed for 1 second in a coagulation liquid containing 62 parts by mass of water, 35 parts by mass of calcium nitrate tetrahydrate, and 3 parts by mass of calcium carbonate, and then removed. After drying for 3 minutes, the mold was immersed for 2 minutes in the chloroprene-based polymer latex composition prepared by the above-mentioned procedure. The mold was then washed with running water at 45°C for 1 minute and dried at 150°C for 60 minutes to prepare a dip-molded product (glove-shaped film) for evaluation.

<Evaluation of dip-molded product>

(Film thickness)

The thickness (film thickness) of the film for evaluation was measured at three points in the center of the film using a test piece thickness gauge (manufactured by Kobunshi Keiki Co., Ltd., product name: ASKER SDA-12), and the minimum thickness was obtained as the thickness of the film for evaluation.

(Storage modulus E' and loss modulus E")

A sample of the dip-molded film was cut out to prepare a rectangular test piece (width: 4.5 mm, length: 30 mm). The obtained rectangular test piece was used to perform a tensile dynamic viscoelasticity measurement (chuck distance: 20 mm) in accordance with the non-resonant forced vibration method. The measurement conditions were static tension 5 gf, temperature 25°C, and strain 0.75% (amplitude: 0.15 mm), and the storage modulus E' and loss modulus E" in the frequency range of 10 Hz were measured. The measurement device used was a DDV-25FP manufactured by Orientec Co., Ltd. The results are shown in Tables 2 and 3. The thickness of the test piece can be 0.18 to 0.21 mm as shown in Tables 2 and 3.

(Tensile strength at break)

Using the dip-molded film, the tensile strength at break was measured in accordance with JIS K 6251. The results are shown in Tables 2 and 3.

<Weight average molecular weight measurement of dip-molded product>

The dip-molded product containing the chloroprene-based polymer was cut into 2 mm squares, and the cut dip-molded product was placed in 20 ml of tetrahydrofuran to make a 0.1% solution and dissolved for 24 hours. The tetrahydrofuran-soluble fraction was then subjected to gel permeation chromatography (GPC) measurement. As a result, a peak with a weight average molecular weight (Mw) of 22,715 was confirmed. The conditions for the GPC measurement were the same as those for the weight average molecular weight measurement in each of the above synthesis examples. The results are shown in Tables 2 and 3.

<Evaluation of texture of glove-shaped dip-molded product>

Five subjects were asked to touch the obtained dip-molded product (glove-shaped film) and evaluate the texture of the dip-molded product by touching the surface condition, and by stretching and folding it. Evaluation was performed according to the following criteria, and the average of each subject's evaluation was rounded to the nearest value.

(Texture evaluation criteria)

3: Extremely soft and pleasant to the touch, with excellent texture
2: Soft, with no practical issues to the touch, with good texture
1: Not very soft, felt a bit hard to the touch, with poor texture

<Evaluation of wearing comfort of glove-shaped dip-molded product>

Five subjects were asked to actually wear the glove-shaped dip-molded product obtained, and the fit was evaluated by focusing on the adhesion (fit) to the hand and the degree of deformation after removal. The evaluation was performed according to the following criteria, and the average of each subject's evaluation was rounded to the nearest value.

(Wearing comfort evaluation criteria)

3: Excellent fit when worn, easy to work with, and returns to its original shape immediately (within 5 minutes) after

removal

2: Fits to a certain extent, takes time (5 minutes or more) to return to its original shape after removal, but there are no practical problems and the wearing comfort is good

1: No fit was felt, and the dip-molded product deformed after removal, and the wearing comfort was poor

[Examples 2 to 11, Comparative Examples 1 to 6]

The dip-molded products were prepared in the same manner as in Example 1, except that the formulation of the chloroprene-based polymer latex composition was set under the conditions shown in Tables 2 and 3 below, and the dip-molded film samples were produced and evaluated. In Examples 2 to 3, 9, and 10 and Comparative Examples 1 to 3 and 6, the dip-molded products either did not contain a low molecular weight chloroprene-based polymer having a weight average molecular weight of 3,000 to 80,000, or the type of the low molecular weight chloroprene-based polymer having a weight average molecular weight of 3,000 to 80,000 contained in the dip-molded products was changed, or the dip-molded products contained only a low molecular weight chloroprene-based polymer. In Examples 4 and 5 and Comparative Examples 4 and 5, the type and mixing ratio of each chloroprene-based polymer latex contained in the dip-molded products were changed. In Example 6, the dip-molded product was obtained without using dibutyldithiocarbamic acid as a vulcanization accelerator and sulfur as a vulcanizing agent contained in the chloroprene-based polymer latex compositions of Examples 1 to 5 and the like. In Example 7, neither a vulcanization accelerator nor sulfur was used, and as an additional agent, 1 part by mass of a heteroaromatic ring compound represented by the following chemical formula (2) (2-mercaptobenzimidazole, product name "Nocrac MB", manufactured by Ouchi Shinko Chemical Industry Co., Ltd.) was added relative to 100 parts by mass of the chloroprene-based polymer. In Example 8 and Comparative Example 2, neither a vulcanization accelerator nor sulfur was used, and as the chloroprene-based polymer contained in the composition, a chloroprene-based polymer not copolymerized with 2,3-dichloro-1,3-butadiene was used. In Example 11, the added amount of zinc oxide having a crosslinking effect was changed.

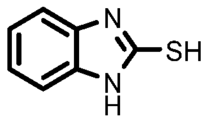

(2)

Table 2

| Table 2 | | | | Examples | | | | | | | | | | | | | | | | | | | | | |
|---|---|---|---|---|---|---|---|---|---|---|---|---|---|---|---|---|---|---|---|---|---|---|---|---|---|
| | | | | 1 | | 2 | | 3 | | 4 | | 5 | | 6 | | 7 | | 8 | | 9 | | 10 | | 11 | |
| Chloroprene-based polymer latex | Synthetic Examples | | | A1 | B1 | A1 | B2 | A1 | B3 | A1 | B1 | A1 | B1 | A1 | B1 | A1 | B1 | A2 | B4 | A1 | B5 | A1 | B6 | A1 | B1 |
| | Mixing ratio of each latex | | % by mass | 80 | 20 | 80 | 20 | 80 | 20 | 90 | 10 | 70 | 30 | 80 | 20 | 80 | 20 | 80 | 20 | 80 | 20 | 80 | 20 | 80 | 20 |
| | Peak with a weight average molecular weight of 3,000 to 80,000 | | g/mol | 22,715 | | 33,628 | | 8,680 | | 22,715 | | 22,715 | | 22,715 | | 22,715 | | 19,632 | | 4,150 | | 68,560 | | 22,715 | |
| | Copolymerization amount of 2,3-dichloro-1,3-butadiene | | % by mass | 9.5 | | 9.4 | | 9.5 | | 9.5 | | 9.6 | | 9.5 | | 9.5 | | - | | 9.7 | | 9.4 | | 9.5 | |
| Formulation of chloroprene-based polymer latex composition | Chloroprene-based polymer | | parts by mass | 100 | | 100 | | 100 | | 100 | | 100 | | 100 | | 100 | | 100 | | 100 | | 100 | | 100 | |
| | Metal oxide | Type 2 zinc oxide | parts by mass | 2.0 | | 2.0 | | 2.0 | | 2.0 | | 2.0 | | 2.0 | | 2.0 | | 2.0 | | 2.0 | | 2.0 | | - | |
| | Anti-aging agent | Nocrac PBK | parts by mass | 2.0 | | 2.0 | | 2.0 | | 2.0 | | 2.0 | | 2.0 | | 2.0 | | 2.0 | | 2.0 | | 2.0 | | 2.0 | |
| | Vulcanizing agent | Sulfur | parts by mass | 1.0 | | 1.0 | | 1.0 | | 1.0 | | 1.0 | | - | | - | | - | | 1.0 | | 1.0 | | 1.0 | |
| | Vulcanization accelerator | Noccela BZ | parts by mass | 2.0 | | 2.0 | | 2.0 | | 2.0 | | 2.0 | | - | | - | | - | | 2.0 | | 2.0 | | 2.0 | |
| | Heteroaromatic ring-based compound | Nocrac MB | parts by mass | - | | - | | - | | - | | - | | - | | 1.0 | | - | | - | | - | | - | |
| Dip-molded product | Film thickness | | mm | 0.20 | | 0.18 | | 0.20 | | 0.19 | | 0.19 | | 0.19 | | 0.19 | | 0.20 | | 0.21 | | 0.20 | | 0.19 | |
| | Peak with a weight average molecular weight of 3,000 to 80,000 | | g/mol | 22,715 | | 33,628 | | 8,680 | | 22,715 | | 22,715 | | 22,715 | | 22,715 | | 19,632 | | 4,150 | | 68,560 | | 22,715 | |
| | Dynamic viscoelasticity | Storage modulus E' | MPa | 2.74 | | 2.79 | | 2.67 | | 2.98 | | 2.63 | | 2.65 | | 2.89 | | 3.13 | | 2.52 | | 3.06 | | 2.56 | |
| | | Loss modulus E" | MPa | 0.31 | | 0.31 | | 0.32 | | 0.28 | | 0.35 | | 0.34 | | 0.30 | | 0.34 | | 0.35 | | 0.31 | | 0.37 | |
| | Mechanical properties | Tensile strength at break | Mpa | 18.8 | | 19.3 | | 18.1 | | 19.2 | | 17.2 | | 17.9 | | 21.2 | | 20.8 | | 17.6 | | 20.2 | | 17.8 | |
| Dip-molded product (glove-shaped film) | Texture | | | 3 | | 3 | | 3 | | 3 | | 3 | | 3 | | 3 | | 2 | | 3 | | 2 | | 3 | |
| | Wearing comfort | | | 3 | | 3 | | 3 | | 3 | | 2 | | 3 | | 3 | | 3 | | 2 | | 3 | | 2 | |

Table 31

| Table 3 | | | | Comparative Examples | | | | | | | | | | | |
|---|---|---|---|---|---|---|---|---|---|---|---|---|---|---|---|
| | | | | 1 | | 2 | | 3 | | 4 | | 5 | | 6 | |
| Chloroprene-based polymer latex | Synthetic Examples | | | A1 | - | A2 | - | A1 | B1 | A3 | B7 | A4 | B8 | - | B1 |
| | Mixing ratio of each latex | | % by mass | 100 | 0 | 100 | 0 | 50 | 50 | 70 | 30 | 50 | 50 | - | 100 |
| | Peak with a weight average molecular weight of 3,000 to 80,000 | | g/mol | X | | X | | 22,715 | | X | | X | | 22,715 | |
| | Copolymerization amount of 2,3-dichloro-1,3-butadiene | | % by mass | 9.5 | | - | | 9.6 | | 10.2 | | - | | 9.6 | |
| Formulation of chloroprene-based polymer latex composition | Chloroprene-based polymer | | parts by mass | 100 | | 100 | | 100 | | 100 | | 100 | | 100 | |
| | Metal oxide | Type 2 zinc oxide | parts by mass | 2.0 | | 2.0 | | 2.0 | | 2.0 | | 2.0 | | 2.0 | |
| | Anti-aging agent | Nocrac PBK | parts by mass | 2.0 | | 2.0 | | 2.0 | | 2.0 | | 2.0 | | 2.0 | |
| | Vulcanizing agent | Sulfur | parts by mass | 1.0 | | - | | 1.0 | | 1.0 | | 1.0 | | 1.0 | |
| | Vulcanization accelerator | Noccela BZ | parts by mass | 2.0 | | - | | 2.0 | | 2.0 | | 2.0 | | 2.0 | |
| | Heteroaromatic ring-based compound | Nocrac MB | parts by mass | - | | - | | - | | - | | - | | - | |
| Dip-molded product | Film thickness | | mm | 0.20 | | 0.18 | | 0.19 | | 0.21 | | 0.18 | | | |
| | Peak with a weight average molecular weight of 3,000 to 80,000 | | g/mol | X | | X | | 22,715 | | X | | X | | | |
| | Dynamic viscoelasticity | Storage modulus E' | MPa | 3.47 | | 3.72 | | 2.45 | | 3.63 | | 3.40 | | | |
| | | Loss modulus E" | MPa | 0.28 | | 0.31 | | 0.40 | | 0.26 | | 0.35 | | | |
| | Mechanical properties | Tensile strength at break | MPa | 24.5 | | 28.9 | | 13.2 | | 19.1 | | 22.8 | | | |

(continued)

| Table 3 | | Comparative Examples | | | | | |
|---|---|---|---|---|---|---|---|
| | | 1 | 2 | 3 | 4 | 5 | 6 |
| Dip-molded product (glove-shaped film) | Texture | 1 | 1 | 3 | 1 | 1 | |
| | Wearing comfort | 3 | 3 | 1 | 3 | 2 | |

※ In the molecular weight distribution obtained by gel permeation chromatography, no peak was observed with a weight average molecular weight between 3,000 and 80,000.

As is clear from Tables 2 and 3, the dip-molded products (dip-molded films) of the chloroprene-based polymers of the present invention in Examples 1 to 11 had low values of the storage modulus E' and the loss modulus E" in the tensile dynamic viscoelasticity measurement and had sufficient tensile strength at break, while also exhibiting excellent texture as dip-molded products (dip-molded films) and excellent wearing comfort when made into gloves.

Since the dip-molded product of Comparative Example 1 does not have a peak of low molecular weight, and the influence of the degree of crosslinking is strong, the storage modulus is considered to be high. As a result, the texture of the dip-molded film was poor.

The dip-molded product in Comparative Example 2 does not have a peak of low molecular weight, and 2,3-dichloro-1,3-butadiene is not copolymerized, and the influence of the degree of crosslinking and crystallinity of the chloroprene-based polymer is strong even without adding the vulcanization accelerator or sulfur, which is considered to be the reason the storage modulus was high. As a result, the texture of the dip-molded product film was poor.

The dip-molded product of Comparative Example 3 has a high ratio of the chloroprene-based polymer having a low molecular weight peak, and is strongly influenced by the viscosity term, which is considered to have increased the loss modulus. As a result, the wearing comfort was deteriorated.

The dip-molded product of Comparative Example 4 does not have a peak of low molecular weight, and it is considered that the influence of the degree of crosslinking was strong, resulting in a high storage modulus. As a result, the texture of the dip-molded film was poor.

The dip-molded product of Comparative Example 5 does not have a low molecular weight peak, and the ratio of the latex containing a relatively low molecular weight chloroprene-based polymer was high, so the storage modulus was high due to the strong influence of the crosslinking degree, and the loss modulus was high due to the strong influence of the viscosity term. As a result, the texture and wearing comfort were deteriorated.

In Comparative Example 6, the chloroprene-based polymer in the chloroprene-based polymer latex composition used to obtain the dip-molded product was only a low molecular weight chloroprene-based polymer, so the dip-molded product was brittle, and the dip-molded product having sufficient strength for evaluating each property could not be obtained.

Moreover, from Examples 2 to 3 and Examples 9 and 10 using Synthesis Examples B2 to B3, B5, and B6, it is found that the weight average molecular weight in the low molecular weight region affects the value of the storage modulus, and the larger the weight average molecular weight, the higher the storage modulus tends to be. Furthermore, as in Example 6, when no vulcanization accelerator or sulfur is contained, the storage modulus and the loss modulus are slightly lower than those of Example 1, for example, but a dip-molded product having sufficient strength and excellent texture and wearing comfort can be obtained. From the above, it was confirmed that the dip-molded product of the chloroprene-based polymer of the present invention has an excellent texture regardless of the presence of the addition of the vulcanizing agent and the vulcanization accelerator, and exhibits an excellent wearing comfort when made into gloves.

## Claims

1. A dip-molded product containing a chloroprene-based polymer, wherein a storage modulus E' is 3.2 MPa or less and a loss modulus E" is 0.37 MPa or less in a frequency region of 10 Hz, obtained by tensile dynamic viscoelasticity measurement of the dip-molded product in accordance with a non-resonant forced vibration method, under conditions of a static tension of 5 gf, a temperature of 25°C, a strain of 0.75% and an amplitude of 0.15 mm.

2. The dip-molded product of Claim 1, wherein the chloroprene-based polymer contains a monomer unit derived from 2,3-dichloro-1,3-butadinene.

3. The dip-molded product of Claim 1 or 2, wherein at least a peak with a weight average molecular weight of 3,000 to 80,000 is detected, when the dip-molded product is dissolved in tetrahydrofuran and a soluble portion is measured by gel permeation chromatography.

4. The dip-molded product of any one of Claims 1 to 3, wherein the dip-molded product contains a metal oxide.

5. The dip-molded product of any one of Claims 1 to 4, wherein:
the dip-molded product is an industrial or general household glove, a medical glove, a balloon, a catheter, or a boot.

6. A chloroprene-based polymer, wherein:

a storage modulus E' is 3.2 MPa or less and a loss modulus E" is 0.37 MPa or less in a frequency region of 10 Hz, obtained by tensile dynamic viscoelasticity measurement of a dip-molded product containing the chloroprene-based polymer in accordance with a non-resonant forced vibration method, under conditions of a static tension of 5 gf, a temperature of 25°C, a strain of 0.75% and an amplitude of 0.15 mm,
the dip-molded product is obtained by forming a chloroprene-based polymer latex composition containing the chloroprene-based polymer into a dip-molded article by an immersion coagulation method and subjecting the dip-molded article to a heat-drying treatment at 150°C for 60 minutes.

**7.** A method for producing a dip-molded product containing a chloroprene-based polymer, comprising:

a molding step of forming a chloroprene-based polymer latex composition containing the chloroprene-based polymer of Claim 6 into a dip-molded article using a calcium-based coagulation liquid by an immersion coagulation method, and
a drying step of subjecting the obtained dip-molded article to a heat-drying treatment to obtain the dip-molded product.

## INTERNATIONAL SEARCH REPORT

International application No.
**PCT/JP2023/011784**

**A. CLASSIFICATION OF SUBJECT MATTER**

***C08L 11/02***(2006.01)i; ***C08F 36/18***(2006.01)i; ***C08F 236/18***(2006.01)i; ***C08K 3/22***(2006.01)i
FI: C08L11/02; C08F236/18; C08K3/22; C08F36/18

According to International Patent Classification (IPC) or to both national classification and IPC

**B. FIELDS SEARCHED**

Minimum documentation searched (classification system followed by classification symbols)

C08L11/02; C08F36/18; C08F236/18; C08K3/22

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2019-143002 A (TOSOH CORP) 29 August 2019 (2019-08-29) tables 1-2, examples, comparative examples, etc. | 1-7 |
| A | JP 7-292165 A (DENKI KAGAKU KOGYO KK) 07 November 1995 (1995-11-07) | 1-7 |
| A | WO 2014/017216 A1 (DENKI KAGAKU KOGYO KK) 30 January 2014 (2014-01-30) | 1-7 |
| P, X | WO 2022/202254 A1 (DENKA COMPANY LTD) 29 September 2022 (2022-09-29) tables 1-3, examples 5-7, comparative examples 1, 3, 5, etc. | 1-7 |
| P, X | WO 2022/202556 A1 (DENKA COMPANY LTD) 29 September 2022 (2022-09-29) tables 2-3, example 7, comparative example 5, etc. | 1-7 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **01 May 2023** | **16 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/011784**

| Patent document cited in search report | Publication date (day/month/year) | Patent family member(s) | Publication date (day/month/year) |
|---|---|---|---|
| JP 2019-143002 A | 29 August 2019 | (Family: none) | |
| JP 7-292165 A | 07 November 1995 | US 5523355 A | |
| | | EP 679683 A1 | |
| WO 2014/017216 A1 | 30 January 2014 | US 2015/0183900 A1 | |
| | | EP 2878605 A1 | |
| | | CN 104470958 A | |
| WO 2022/202254 A1 | 29 September 2022 | (Family: none) | |
| WO 2022/202556 A1 | 29 September 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2014114342 A
- WO 2019009038 A
- JP 2019143002 A
- WO 2021132460 A
- JP 2017508840 A
- JP 2020189963 A